# EUROPÄISCHE PATENTSCHRIFT

(11) **EP 1 721 694 B1**
(45) Veröffentlichungstag und Bekanntmachung des Hinweises auf die Patenterteilung: **28.05.2008**
(21) Anmeldenummer: 06009524.7
(22) Anmeldetag: 09.05.2006
(51) Int. Cl.: B23K 1/00, F01N 3/28, B01J 37/02

(54) **Verfahren zur Herstellung mindestens eines Blechelements, Verfahren zur Herstellung mindestens eines Katalysatorkörpers, hergestelltes Blechelement sowie hergestellter Katalysatorkörper**
Method for producing at least one metal sheet element, method for producing at least one catalyst body, produced metal sheet element and catalyst body
Procédé de fabrication d'au moins un élément métallique en tôle, procédé de fabrication d'au moins un corps catalytique, élément métallique en tôle et corps catalytique

(30) Priorität: 11.05.2005 CH 8282005
(43) Veröffentlichungstag der Anmeldung: 15.11.2006
(73) Patentinhaber: SCAMBIA INDUSTRIAL DEVELOPMENTS AKTIENGESELLSCHAFT, 9494 Schaan (LI)
(72) Erfinder: Steenackers, Pieter Delfina, Dr., 3030 Heverlee (BE)
(74) Vertreter: Braun, André jr.

(56) Entgegenhaltungen:
- EP-A- 0 049 489
- EP-A- 0 674 944
- EP-A- 1 300 555
- EP-A- 1 529 934
- WO-A-98/15354
- DE-A1- 19 744 734
- US-A- 5 094 074
- US-A1- 2002 197 580

## Beschreibung

Die Erfindung betrifft ein Verfahren zur Herstellung mindestens eines Blechelements zur Bildung mindestens eines Katalysatorkörpers für eine katalytische Behandlung von Gas, insbesondere von Abgas eines Verbrennungsmotors, nämlich eines Wellen aufweisenden Blechelements gemäss dem Oberbegriff des Anspruchs 1.

Die EP 0 049 489 A1 offenbart ein Verfahren zur Herstellung eines Katalysatorkörpers aus zwei Blechelementen, nämlich aus einem Blechband mit trapezförmigen Wellen und einem ursprünglich flachen Blechband. Die beiden Blechbänder werden gemeinsam zu einer spiralförmigen Wicklung gewickelt, so dass einander paarweise benachbarte Blechelement-Lagen entstehen, von denen jede aus einer Windung von einem der beiden Blechbänder besteht. Die beiden Blechbänder werden bei den Wellenscheiteln des gewellten Blechbands miteinander verlötet und danach mit Edelmetall enthaltenden Überzügen versehen. Da die Überzüge erst nach dem Wickeln und Verlöten der Blechbänder aufgebracht werden, ergeben sich ungleichmässig dicke Überzüge. So werden die Überzüge beispielsweise in den von den einander berührenden Blechbändern gebildeten Ecken dicker als in zwischen solchen Ecken liegenden Bereichen. Ungleichmässige Dicken der Überzüge führen zum Nachteil, dass das katalytisch aktive Edelmetall nicht optimal verteilt ist und schlecht ausgenutzt werden kann.

Aus der EP 0 674 944 A1 und der entsprechenden US 5 628 925 A ist es bekannt, zur Bildung eines Katalysatorkörpers derart Überzüge auf mindestens ein glattes, wellenfreies Metallband und auf mindestens ein gewelltes Metallband aufzubringen, dass Blechelemente mit blanken, überzugsfreien streifenförmige Bereichen entstehen, die in der Längsrichtung der Metallbänder verlaufen und beim fertigen Katalysatorkörper die Wellen kreuzen. Die überzugsfreien Bereiche werden mit Hilfe von Blenden beim Aufbringen des Übergangsmaterials oder dadurch erzeugt, dass zuerst eine Trennmittelschicht auf die zu bildenden, überzugsmaterialfreien Bereiche aufgebracht wird. Diese Trennmittelschicht kann dann entweder das Anhaften des Überzugsmaterials verhindern oder ermöglichen, dieses durch Erhitzen und Abblasen zu entfernen. Die Überzüge und blanke Bereiche aufweisenden Blechelemente werden dann gewickelt oder gefaltet oder aufeinander gestapelt, so dass aneinander anliegende Blechelement-Lagen entstehen. Diese werden bei den Wellenscheiteln durch Elektronenstrahl- oder Laser- oder Rollrad-Widerstands-Schweissen oder Löten fest miteinander verbunden.

Beim Überziehen von Blechelementen ist es oft wünschenswert, nacheinander mehrere Lagen von einem im Wesentlichen aus Aluminiumoxid bestehenden, porösen Überzugsmaterial, dem so genannten "wash coat", und danach mindestens ein Edelmetall auf ein Blechelement aufzubringen und das Blechelement zwischen den verschiedenen Überzugsvorgängen in einem Ofen zu erhitzen. Die Bildung von streifenförmigen, überzugsfreien Bereichen mit den aus der EP 0 674 944 A1 und der US 5 628 925 A bekannten Verfahren ist jedoch bereits beim Aufbringen von nur einer einzigen "wash coat" Schicht und insbesondere beim Aufbringen von mehreren "wash coat" Schichten sowohl bei der Verwendung von Blenden als auch bei der Verwendung eines Trennmittels sehr aufwendig. Beim Aufbringen von "wash coat" müssen nämlich vor jedem Aufbringen einer "wash coat" Lage Blenden an den richtigen Stellen angeordnet bzw. neue Trennmittelschichten aufgetragen werden. Diese bekannten Verfahren haben ferner den Nachteil, dass die Blechelemente auch auf den Wellenscheiteln neben den überzugsfreien Bereichen Überzüge aufweisen, so dass die überzugsfreien Bereiche der einander benachbarten Blechelement-Lagen zumindest vor dem Verbinden der Blechelement-Lagen auch bei den Wellscheiteln in kleinen Abständen voneinander stehen. Dies beeinträchtigt die Stabilität und Dauerhaftigkeit von Verbindungen, insbesondere von Schweiss-Verbindungen. Wenn Blechelement-Lagen sich bei der Benutzung des Katalysatorkörpers infolge von thermischen Spannungen, Vibrationen und sonstigen Beschleunigungen gegeneinander bewegen, können die Bewegungen zudem bei den Wellenscheiteln einen Abrieb des Überzugsmaterials verursachen. Des Weiteren haben die gemäss der EP 0 674 944 A1 und US 5 628 925 A hergestellten Katalysatorkörper den Nachteil, dass die überzugsfreien Bereiche auch zwischen den einander benachbarten Wellenscheiteln liegende Teil-Bereiche haben, die ziemlich gross sind und natürlich keine katalytische Behandlung des Abgases ergeben.

Die EP 1 300 555 A2 offenbart Katalysatorkörper mit abwechselnd aufeinander folgenden, ebenen und gewellten Blechelement-Lagen. Die ebenen Blechelement-Lagen sind zum Teil vollständig blank und zum Teil stellenweise mit Überzügen aus katalytisch aktivem Material versehen. Die gewellten Blechelement-Lagen sind alle vollständig blank und liegen mit Wellenscheiteln auf vollständig blanken, ebenen Blechelement-Lagen oder auf blanken Bereichen von stellenweise mit Überzügen versehenen, ebenen Blechelement-Lagen auf. Die EP 1 300 555 A2 offenbart jedoch nicht, wie die Überzüge aufgebracht und dazwischen überzugsfreie Bereiche gebildet werden. Des Weiteren sind die Katalysatorkörper zum teilweisen Verbrennen eines Brennstoffs und nicht zur Reinigung von Abgas eines Verbrennungsmotors vorgesehen. Da die von den gewellten und Blechelement-Lagen begrenzten Kanäle bzw. Durchgänge für das Abgas durch Flächen begrenzt sind, die grosse blanke Bereiche haben oder bei gewissen Durchgängen sogar völlig blank und frei von katalytisch aktivem Material sind, bewirken diese Katalysatorkörper nur eine geringe katalytische Behandlung des durch die Durchgänge strömenden Abgases und wären auch gar nicht für die katalytische Reinigung von Abgas eines Verbrennungsmotors geeignet.

Der Erfindung liegt die Aufgabe zugrunde, ein Verfahren zur Herstellung einer Wellen, einen metallischen Kern, stellenweise Überzüge und bei den Wellenscheitel blanke, überzugsfreie Bereiche aufweisende Blechelements zu schaffen, wobei die Überzüge mindestens ein eine poröse Struktur ergebendes Metalloxid und ein katalytisch aktives Material, beispielsweise mindestens ein katalytisch aktives Edelmetall, enthalten sollen und wobei das Verfahren ermöglichen soll, Nachteile der bekannten Verfahren zu vermeiden. Das Verfahren soll insbesondere ausgehend von der EP 0 674 944 A1 ermöglichen, auf einfache, kostengünstige Weise nach Wunsch eine oder mehrere Schichten von einem mindestens ein Metalloxid enthaltenden, zur Bildung eines porösen Überzugs dienenden Überzugsmaterial aufzubringen und an den gewünschten Stellen metallisch blanke Bereiche zu schaffen. Die metallisch blanken Bereiche sollen dabei derart angeordnet werden können, dass nach der Fertigstellung mindestens eines Blechelements Blechelement-Lagen aus einem oder mehreren Blechelementen gebildet und einander benachbarte Blechelement-Lagen bei metallisch blanken Bereichen stabil sowie dauerhaft miteinander verbunden werden können, um einen Katalysatorkörper mit einer gewünschten, günstigen, beispielsweise gleichmässiger Verteilung des katalytisch aktiven Materials und einer hohen katalytischen Wirkung zu bilden.

Die Aufgabe wird erfindungsgemäss durch ein Verfahren mit den Merkmalen des Anspruchs 1 gelöst.

Die Erfindung betrifft ferner ein Verfahren zur Herstellung eines Katalysatorkörpers mit den Merkmalen des Anspruchs 9, ein hergestelltes Blechelement gemäss dem Anspruch 13 und einen hergestellten Katalysatorkörper gemäss dem Anspruch 14.

Vorteilhafte Weiterbildungen der Erfindung gehen aus den abhängigen Ansprüchen hervor.

Der Erfindungsgegenstand wird anschliessend anhand von in den Zeichnungen dargestellten Ausführungsbeispielen näher erläutert. In den Zeichnungen zeigen
Fig. 1 eine Draufsicht auf ein gewelltes Blechelement,
Fig. 2 eine Seitenansicht einer Einrichtung zum Aufsprühen von erstem Überzugsmaterial auf ein gewelltes Blechelement,
Fig. 3 eine Darstellung einer Einrichtung zum Erhitzen eines mit erstem Überzugsmaterial überzogenen Blechelements,
Fig. 4 eine Einrichtung zur mechanischen Entfernung von Überzugsmaterial,
Fig. 5 eine Einrichtung mit einem Bad zum Aufbringen von zweitem Überzugsmaterial auf ein Blechelement,
Fig. 6 eine Schrägansicht von gewellten Blechelement-Lagen für die Bildung eines Katalysatorkörpers,
Fig. 7 eine Seitenansicht einer Schweiss-Einrichtung zum Verschweissen von einem Stapel gewellter Blechelement-Lagen,
Fig. 8 eine Seitenansicht eines Katalysatorkörpers,
Fig. 9 einem Schnitt durch den Katalysatorkörper entlang der Linie IX - IX in Fig. 8,
Fig. 10 einem Schnitt durch einen Abschnitt eines Katalysatorkörpers entlang der Linie X - X in Fig. 9, in grösserem Massstab,
Fig. 11 eine Ansicht einer Anlage zum Verarbeiten von mehreren gewellten Blechelementen zu Blöcken mit verschweissten Blechelement-Lagen und
Fig. 12 eine Schrägansicht eines Katalysatorkörpers mit mehreren Blöcken, die je einen Stapel verschweisster Blechelement-Lagen aufweisen.

Zu den Zeichnungen sei noch angemerkt, dass verschiedene Figuren schematisch sowie nicht massstäblich gezeichnet sind und dass insbesondere die verschiedenen Einrichtungen zum Verarbeiten von Blechelementen stark vereinfacht dargestellt sind.

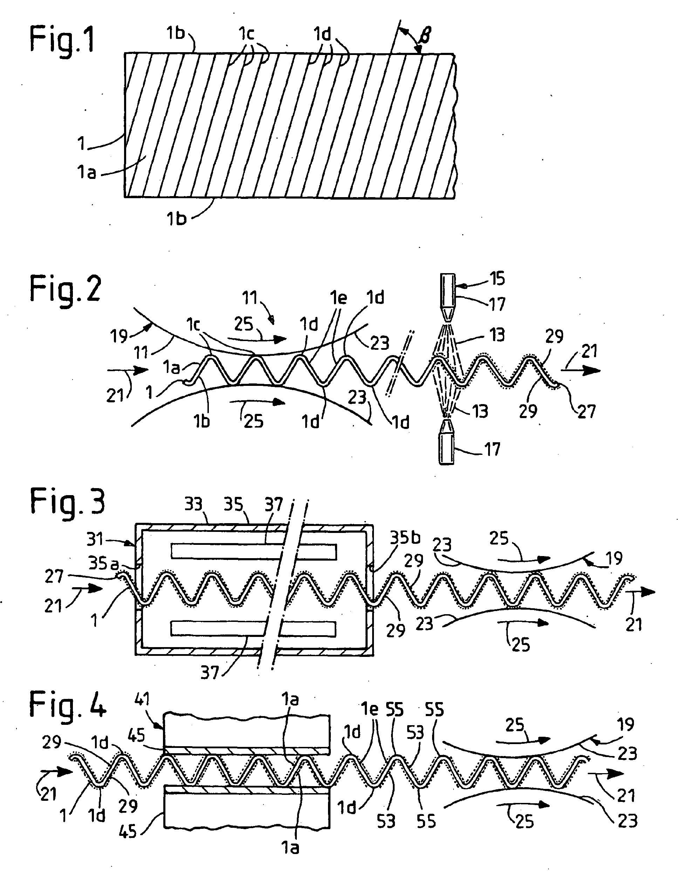

Für die Herstellung eines Katalysatorkörpers wird zuerst mindestens ein gewelltes Blechelement 1 hergestellt und bereitgestellt, das ausschliesslich aus blankem Metall, zum Beispiel rostfreiem Stahl besteht und in Fig. 1 sowie im linken Teil der Fig. 2 ersichtlich ist. Das Blechelement 1 ist vorzugsweise bandförmig und also aus einem Blechband gebildet. Das Blechelement hat zwei einander abgewandte Flächen 1a und zwei in der Draufsicht gerade, zueinander parallele, erste Ränder 1b, die durch die Längsränder des Blechbands gebildet sind. Die Wellen 1c des Blechelements 1 haben obere sowie untere Wellenscheitel 1d und Wellenflanken 1e. Die Wellen 1c und ihre Wellenscheitel 1d sind gerade sowie parallel zueinander und bilden in der Draufsicht mit den ersten Rändern 1b bzw. Längsrändern einen Winkel β, der von 90° verschieden ist, vorzugsweise mindestens 60°, vorzugsweise höchstens 85° und zum Beispiel 70° bis 80° beträgt. Die die Wellenscheitel bildenden Scheitelabschnitte der Wellen sind in einem quer zu den Wellenscheiteln verlaufenden Schnitt gebogen und/oder zuoberst sowie zuunterst sogar mit einem schmalen, ebenen Abschnitt versehen.

Das in blankem Zustand mit Wellen versehene Blechelement 1 wird nun in mehreren Schritten bei beiden Flächen 1a stellenweise mit Überzügen versehen. Dabei wird zunächst mit der in Fig. 2 ersichtlichen Beschichtungs-Einrichtung 11 eine Lage von einem ersten Überzugsmaterial 13 auf beide Flächen 1a des Blechelements 1 aufgebracht. Die Beschichtungs-Einrichtung 11 hat eine Sprühvorrichtung 15, die mindestens eine Sprühdüse 17 und nämlich auf jeder der beiden Seiten, d.h. bei beiden Flächen 1a, des Blechelements 1 mindestens eine Sprühdüse 17 aufweist. Jede dieser Sprühdüsen hat zum Beispiel eine schlitzförmige, quer zum Blechelement verlaufende Sprühöffnung, die sich annähernd über die ganze Breite des Blechelements erstreckt. Die Beschichtungs-Einrichtung 11 kann jedoch auch auf beiden Seiten des Blechelements mehrere über die Breite des Blechelements verteilte Sprühdüsen aufweisen, die zum Beispiel in einer quer zu den Rändern 1b des Blechelements verlaufenden Reihe angeordnet sind und die kreisförmige oder schlitzförmige Sprühöffnungen haben. Im Übrigen kann das erste Überzugsmaterial beispielsweise mit Hilfe von den Sprühdüsen zugeführter Luft oder ohne solche Luft zersprüht werden. Die Einrichtung 11 hat noch Führungs- und Transportmittel 19, um das bandförmige Blechelement zu führen und in der durch Pfeile bezeichneten Transportrichtung 21 zwischen den Sprühdüsen 17 hindurch und an diesen vorbei zu transportieren. Die Führungs- und Transportmittel 19 können zum Beispiel feststehende Führungsflächen und am Blechelement angreifende Rollen und/oder Transportbänder oder dergleichen aufweisen. Die Transportmittel sind in Fig.2 schematisch durch zwei sich gegenüberstehende Rollen 23 angedeutet, die durch eine Antriebsvorrichtung in Richtung der Pfeile 25 gedreht werden und an den unteren und oberen Wellenscheiteln 1d des Blechelements angreifen. Das mit den Sprühdüsen auf das Blechelement aufgesprühte, erste Überzugsmaterial besteht aus einer wässerigen Dispersion, die dispergierte Partikel aus mindestens einem Metalloxid, nämlich Aluminiumoxid, und eventuell noch mindestens einen dispergierten und/oder gelösten Zusatzstoff, etwa ein Bindemittel enthält. Das besprühte Blechelement 1 weist dann einen von ursprünglichen blanken Blechelement gebildeten, metallische Kern 27 und Überzüge 29 auf, welche den Kern 27 bei den beiden Flächen 1a vollständig bedecken.

Die aufgesprühten Überzüge 29 sind zunächst noch feucht. Das Blechelement 1 wird unmittelbar anschliessend an die Besprühung mit erstem Überzugsmaterial sowie fortlaufend oder nach einer kurzen Zwischenzeit der in Fig. 3 ersichtlichen Trocknungs-Einrichtung 31 zugeführt. Diese besitzt zum Beispiel einen Ofen 33 mit einem Gehäuse 35. Das Gehäuse kann zum Beispiel eine Eintrittsöffnung 35a sowie eine Austrittsöffnung 35b aufweisen, so dass das Blechelement 1 mit Führungs- und Transportmitteln in der Transportrichtung 21 durch das Gehäuse hindurch transportiert werden kann. Diese Führungs- und Transportmittel sind wie diejenigen in Fig. 2 mit 19 bezeichnet und besitzen zum Beispiel wiederum mindestens zwei in den durch die Pfeile 25 bezeichneten Drehrichtungen angetriebene Rollen 23 und/oder Transportbänder oder dergleichen. Das Gehäuse 35 des Ofens enthält Heizmittel, die beispielsweise im Abstand von den beiden Flächen 1a des Blechelements 1 angeordnete, elektrisch oder mit einem Brennstoff erhitzbare Heizelemente 37 aufweisen. Die Überzüge 29 werden im Ofen der Trocknungs-Einrichtung erhitzt, getrocknet sowie zusammengebacken und/oder eingebrannt und bilden dann eine feste und poröse Schicht. Diese besteht entsprechend der Zusammensetzung der als erstes Überzugsmaterial 13 aufgesprühten Dispersion mindestens zum grössten Teil aus mindestens einem Metalloxid, nämlich Aluminiumoxid.

Der durch Aufsprühen und Trocknen von erstem Überzugsmaterial 13 gebildete, poröse Überzug kann nun den sogenannten "wash coat" oder mindestens eine der Schichten des "wash coats" bilden. Es ist nämlich oft vorteilhaft, nach dem Aufsprühen und Trocknen einer Schicht von erstem Überzugsmaterial noch mindestens eine zusätzliche Schicht von erstem, mindestens ein Metalloxid enthaltenden Überzugsmaterial auf das Blechelement aufzusprühen und zu trocknen. Das Blechelement kann hierzu noch ein zweites Mal oder, falls mehr als zwei "wash coat" Schichten aufgebracht werden, noch weitere Male mit den in den Figuren 2 und 3 dargestellten Einrichtungen behandelt werden. Es besteht jedoch auch die Möglichkeit, eine Anlage vorzusehen, die zwei oder mehr Beschichtungs-Einrichtungen 11 sowie zwei oder mehr Trocknungs-Einrichtungen 31 aufweist, so dass ein Blechelement 1 beispielsweise fortlaufend abwechselnd durch eine Beschichtungs-Einrichtung 11 und eine Trocknungs-Einrichtung 31 hindurchtransportiert werden kann.

Wenn nacheinander zwei oder mehr Schichten eines ersten Überzugsmaterials auf das Blechelement aufgesprüht und jeweils nach dem Aufsprühen erhitzt, getrocknet sowie zusammengebacken und/oder eingebrannt werden, können die zur Bildung der verschiedene Schichten dienenden Überzugsmaterialien gleich oder verschieden sein. Im letzteren Fall können die nacheinander aufgesprühten, ersten Überzugsmaterialien zum Beispiel verschiedene Konzentrationen von dispergierten Metalloxidpartikeln und/oder Metalloxidpartikel mit verschiedenen Partikelgrössen und/oder verschiedene Zusatzstoffe enthalten. Dies kann zum Beispiel ermöglichen, beim Aufbringen der verschiedene Schichten nacheinander unterschiedliche poröse Strukturen mit verschieden grossen Poren zu erzeugen. Das erste Überzugsmaterial soll jedoch vorzugsweise in allen Fällen noch kein katalytisch aktives Edelmetall enthalten und ausschliesslich zur Bildung von einem porösen, von Edelmetall freien "wash coat" dienen.

Das bei beiden Flächen 1a mit je einem einschichtigen oder mehrschichtigen Überzug 29 versehene Blechelement 1 wird nun in einem weiteren Behandlungsschritt mit der in Fig. 4 dargestellten Einrichtung 41 weiterbehandelt. Diese ist zum mechanischen, d.h. abrasiven Entfernen von erstem Überzugsmaterial ausgebildet und weist Mittel auf, um die aus erstem Überzugsmaterial gebildeten Überzüge 29 stellenweise durch Abschleifen und/oder Abschaben und/oder Abkratzen und/oder Abreiben wieder zu entfernen. Die Einrichtung 41 besitzt zum Beispiel mindestens zwei Schleiforgane 45 und Führungs- und Transportmittel 19. Diese besitzen zum Bespiel wiederum angetriebene Rollen 23 und/oder Transportbänder oder dergleichen und sind ausgebildet, um das Blechelement 1 zwischen den beiden Schleiforganen 45 hindurch zu transportieren. Die Schleiforgane 45 bestehen zum Beispiel aus flexiblen Schleifbändern, von denen jedes einen im Allgemeinen ebenen Abschnitt hat, der bei der ihm zugeordneten Seite bzw. Fläche 1a des Blechelements 1 bei mindestens einem Wellenscheitel und nämlich bei einigen Wellenscheiteln 1d an der Aussenseite von jedem dieser Wellenscheitel angreift. Mit dem Ausdruck "an der Aussenseite angreift" ist dabei gemeint, dass das sich in Fig. 4 unter dem Blechelement 1 befindende Schleiforgan 45 nur auf der unteren, im Bezug auf die betreffende Welle eben äusseren Seite eines Wellenscheitels angreift und dass das sich in Fig. 4 oben befindende Schleiforgan nur auf der oberen, in Bezug auf die betreffende Welle äusseren Seite eines Wellenscheitels an diesem angreift. Die Schleifbänder sind beispielsweise derart angeordnet und werden derart angetrieben, dass ihre an Wellenscheiteln angreifenden Abschnitte rechtwinklig zur Längsrichtung des Blechelements verlaufen und bewegt werden. Es wäre jedoch auch möglich, die Schleifbänder derart anzuordnen, dass ihre am Blechelement angreifende Abschnitte parallel zu den Wellenscheiteln oder in der Längsrichtung des Blechelements bewegt werden.

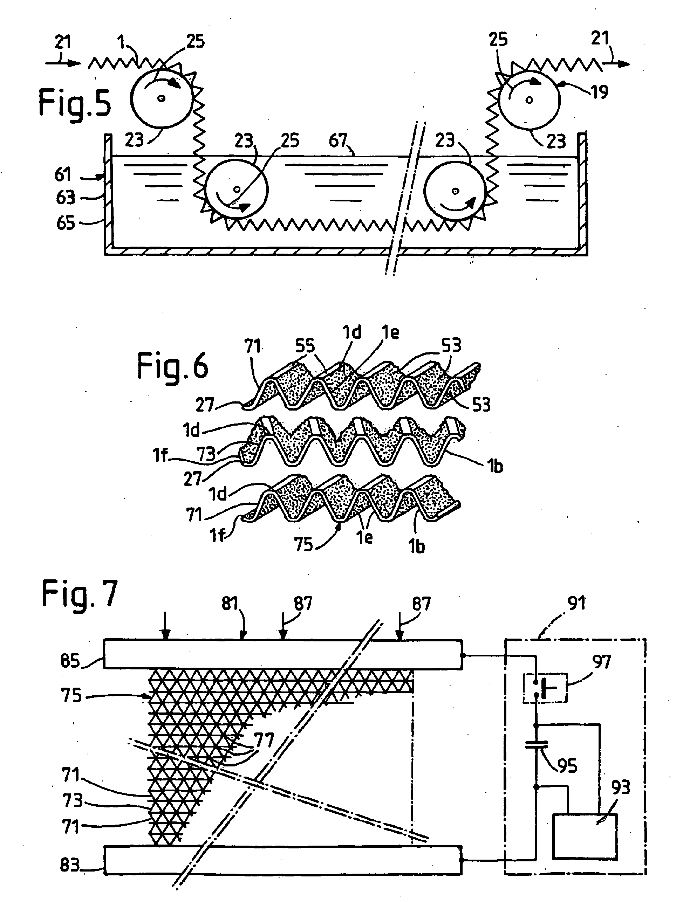

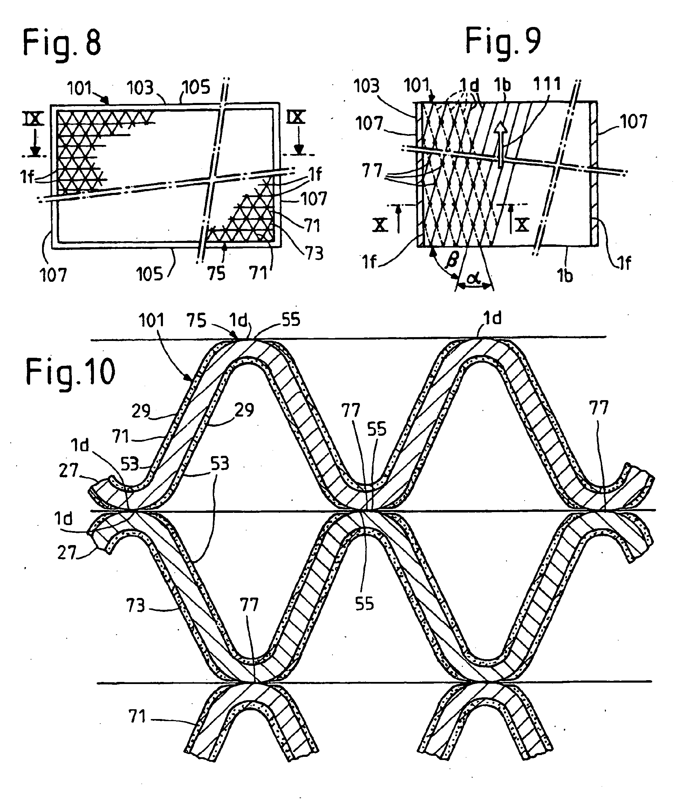

Wenn das bei beiden Flächen 1a einen Überzug 29 aufweisende Blechelement 1 in der Transportrichtung 21 zwischen den Schleiforganen 45 hindurch an diesen vorbei bewegt wird, werden die Überzüge 29 auf der Aussenseite der Wellenscheitel weggeschliffen. Das Blechelement hat dann noch überzogene Bereiche 53, bei denen die Überzüge 29 noch vorhanden sind, und dazwischen metallisch blanke, überzugsfreie Bereiche 55. Diese Bereiche 53, 55 sind auch deutlich in den noch näher beschriebenen Figuren 6 sowie 10 ersichtlich und bilden Streifen, die sich entlang den Wellenscheiteln 1d unterbruchslos über die ganze Länge der Wellenscheitel und also über die ganze Breite des bandförmigen Blechelements 1 erstrecken. Jeder bei einer der beiden Flächen 1a vorhandene, überzogene Bereich 53, der sich nicht gerade an einem Ende des Blechelements 1 befindet, erstreckt sich lückenlos über fast eine ganze Wellenlänge von einem sich auf der Aussenseite eines Wellenscheitels 1d befindenden, blanken Bereich 55 über zwei Wellenflanken 1e und die Innenseite des sich zwischen diesen zwei Wellenflanken befindenden Wellenscheitels bis zum blanken Bereich beim nächsten Wellenscheitel 1d, dessen Aussenseite von der gleichen Fläche 1a gebildet wird. Die überzogenen Bereiche 53 haben also, quer zu den Wellenscheiteln gemessen, eine wesentlich grössere Ausdehnung als die blanken Bereiche 55 und nehmen dementsprechend grössere Flächen ein als die blanken Bereiche 55.

Wenn die vom ersten Überzugsmaterial 13 gebildeten Überzüge 29 in der beschriebenen Weise auf der Aussenseite der Wellscheitel entfernt wurden, wird das Blechelement 1 der in Fig. 5 ersichtlichen Beschichtungs-Einrichtung 61 zugeführt. Diese weiset eine Wanne 63 auf, die ein Bad 65 mit einer Flüssigkeit 67 enthält, welche ein zweites Überzugsmaterial aufweist und/oder zu dessen Bildung dient. Die Flüssigkeit 67 besteht zum Beispiel aus einer Lösung, die Wasser und/oder ein organisches Lösungsmittel und mindestens eine Vorläufer-Verbindung von mindestens einem Edelmetall, beispielsweise mindestens ein gelöstes Salz von mindestens einem katalytisch aktiven Edelmetall, nämlich zum Beispiel von Platin und/oder Palladium und/oder Rhodium, enthält. Eventuell kann die Flüssigkeit 67 zusätzlich zu mindestens einem gelöstem Edelmetall-Salz oder anstelle von solchem mindestens eine dispergierte Edelmetall-Vorläufer-Verbindung, wie mindestens ein dispergiertes Edelmetall-Salz, und/oder mindestens ein dispergiertes Edelmetall enthalten. Die Beschichtungs-Einrichtung 61 kann zum Beispiel noch schematische dargestellte Führungs- und Transportmittel 19 mit einigen mindestens zum Teil angetriebenen Rollen 23 und/oder Transportbändern oder dergleichen aufweisen, um das bandförmige Blechelement durch die Flüssigkeit 67 hindurch zu bewegen.

Wenn sich ein Abschnitt des Blechelements in der Flüssigkeit 67 des Bads 65 befindet und beispielsweise durch dieses hindurch bewegt wird, wird zweites Überzugsmaterial auf die vorher gebildeten, überzogenen Bereiche aufgebracht. Dabei wird als zweites Überzugsmaterial zum Beispiel mindestens ein Edelmetall und/oder eventuell mindestens ein Edelmetall-Salz auf den mit erstem Überzugsmaterial überzogenen Bereichen 53 des Blechelements abgeschieden und durch Sorption, zum Beispiel durch Chemisorption und/oder eventuell Physisorption vom ersten, mindestens im Wesentlichen am Metalloxid bestehenden Überzugsmaterial adsorbiert und gebunden. Das bzw. mindestens ein Edelmetall und/oder mindestens ein Edelmetall-Salz wird dabei an den vorher aus dem ersten Überzugsmaterial 13 gebildeten, porösen Überzügen angelagert und/oder in deren Poren eingelagert, wobei das Edelmetall bzw. Edelmetall-Salz dann normalerweise keine kompakte Schicht, sondern feine, verteilte Kristallite bildet. Das Blechelement wird nach der Behandlung in der Flüssigkeit noch mit einer nicht gezeichneten Trocknungs-Einrichtung erhitzt und getrocknet. Diese Trocknungs-Einrichtung kann zum Beispiel ähnlich ausgebildet sein wie die in Fig. 3 dargestellte Trocknungs-Einrichtung. Nötigenfalls kann beim Erhitzen und Trocknen auch noch eine Kalzinierung und/oder eine Reduktion in Wasserstoff und/oder eine sonstige chemische Behandlung durchgeführt werden. Falls beim Sorptions-Vorgang im Bad nicht direkt mindestens ein Edelmetall, sondern anstelle von solchem oder zusätzlich zu solchem zuerst mindestens ein Edelmetall-Salz und/oder eventuell mindestens eine andere Vorläufer-Verbindung mindestens eines Edelmetalls an den Überzügen angelagert wurde, wird das Edelmetall spätestens bei der nachfolgenden Erhitzung sowie der eventuell erfolgenden Kalzinierung und/oder Reduktion und/oder sonstigen chemischen Behandlung von den restlichen Komponenten des Edelmetall-Salzes getrennt, so dass nur das Edelmetall oder die Edelmetalle in den Überzügen verbleiben. Die überzogenen Bereiche 53 weisen dann Überzüge auf, die aus dem porösen, "wash coat" und mindestens einem als katalytisch aktives Material dienenden Edelmetall, zum Beispiel Platin und/oder Palladium und/oder Rhodium, mit feinen, verteilten Kristalliten bestehen.

Bei der Behandlung des Blechelements 1 in Bad 65 wird nur auf der mit erstem Überzugsmaterial überzogenen Bereichen 53, nicht aber auf den metallisch blanken Bereichen 55 des Edelmetall-Salz oder Edelmetall adsorbiert. Es wird also nur dort teures Edelmetall aufgebracht, wo es dann auch für die katalytische Behandlung von Abgas verwendet wird. Im Übrigen werden die Überzüge beispielsweise derart aufgebracht, dass sie bei den überzogenen Bereichen 53 überall mindestens annähernd gleich dick sind. Man könnte jedoch stattdessen eventuell vorsehen, dass die Dicken der Überzüge in der sich bei der Verwendung der Blechelemente in einen Katalysator ergebenden, allgemeinen Strömungsrichtung des Abgases in einer vorgegebenen Weise variieren.

Das bzw. jedes bandförmige, stellenweise Überzüge mit mindestens einem Metalloxid und mindestens einem Edelmetall aufweisende Blechelement 1 wird mit einer nicht gezeichneten Schneid-Einrichtung in gleich grosse, viereckförmige, nämlich rechteck- oder quadratförmige Stücke zerschnitten. Das bandförmige Blechelement 1 kann zum Beispiel eine Breite haben, die gleich einer der gewünschten Abmessungen der zur Bildung von Blechelement-Lagen bestimmten Stücke ist, so dass direkt Stücke mit der Form und Grösse der Blechelement-Lagen vom bandförmigen Blechelement 1 abgeschnitten werden können. Das Blechelement 1 kann jedoch auch aus einer relativ breiten Bahn bestehen und zur Bildung der gewünschten Stücke bzw. Blechelement-Lagen sowohl quer als auch parallel zu den ersten Rändern 1b zerschnitten werden. Jedes der aus dem Blechelement 1 gebildete Stücke hat zwei zueinander parallel Ränder, die durch Abschnitte der ersten Ränder 1b der bandförmigen Blechelemente gebildet sind oder mindestens parallel zu diesen ersten Rändern verlaufen und wie diese als erste Ränder 1b bezeichnet werden. Jede Blechelement-Lage hat ferner zwei zweite, zueinander parallele Ränder, die mit den ersten Rändern 1b einem rechten Winkel bilden und in den Figuren 6, 8 und 9 mit 1f bezeichnet sind. Die Stücke des Blechelements 1 oder der Blechelemente werden nun aufeinander gestapelt, so dass jedes Stück eine in Fig. 6 mit 71 oder 73 bezeichnete Blechelement-Lage eines Stapels 75 von Blechelement-Lagen bildet. Die Blechelement-Lagen werden beim Aufeinanderstapeln derart angeordnet, dass abwechselnd erste Blechelement-Lagen 71 und zweite Blechelement-Lagen 73 aufeinander folgen, deren Wellen und Wellenscheitel 1d auf verschiedene Seiten von den einander überdeckenden, ersten Rändern 1b weggeneigt sind. Die Wellen und Wellscheitel der einander benachbarten Blechelement-Lagen 71, 73 kreuzen einander dann unter einem von 90° verschiedenen, spitzen Winkel, der in Fig. 9 mit α bezeichnet ist. Der Winkel α ist bestimmt durch die Beziehung α = 2 · (90 - β) und beträgt vorzugsweise mindestens 10°, vorzugsweise höchsten 60° und zum Beispiel 20° bis 40°. Wenn die Blechelement-Lagen 71, 73 aneinander anliegen, berühren sie einander bei den Kreuzungsstellen der Wellenscheitel 1d bei Berührungsbereichen, die von Teilen der blanken Bereiche 55 gebildet und in den Figuren 7, 9 und 10 mit 77 bezeichnet sind.

Die aufeinander gestapelten Blechelement-Lagen 71, 73 werden nun bei den Berührungsbereichen 77 stoffschlüssig miteinander verbunden, nämlich mit Hilfe der in Fig. 7 ersichtlichen, elektrischen Schweiss-Einrichtung 81 durch Widerstandsschweissen miteinander verschweisst. Die Schweiss-Einrichtung 81 hat zum Beispiel unten eine feststehende Elektrode 83 und oben eine Elektrode 85, die vertikal verstellbar ist und mit einer Stell- und Pressvorrichtung gegen die untere Elektrode 83 gedrückt werden kann, wie es durch Pfeile 87 angedeutet ist. Die beiden Elektroden haben ebene, einander zugewandte Flächen. Die Schweiss-Einrichtung 81 besitzt noch eine Stromzufuhrvorrichtung 91 mit einem an das Stromnetz angeschlossenen Stromversorgungsteil 93, der mit mindestens einem Kondensator 95 verbunden ist. Dieser ist seinerseits über eine beispielsweise ein Relais aufweisende Schaltvorrichtung 97 mit den beiden Elektroden 83, 85 verbunden.

Der aus Blechelement-Lagen 71, 73 gebildete Stapel 75 wird zum Zusammenschweissen zwischen den beiden Elektroden 83, 85 angeordnet. Die obere Elektrode 85 wird dann gegen den Stapel 75 und die untere Elektrode 83 gedrückt, wodurch die Blechelement-Lagen 71, 73 des Stapels gegeneinander gedrückt werden. Der bzw. jeder vorher durch den Stromversorgungsteil 93 aufgeladene Kondensator 95 wird nun durch vorübergehendes Schliessen der Schaltvorrichtung 97 über die Elektroden 83, 85 und den Stapel 75 von Blechelement-Lagen entladen. Dabei wird ein starker, aber nur kurzer, beispielsweise einige Millisekunden dauernder Stromstoss erzeugt, so dass die Blechelemente bei den Berührungsbereichen 77 miteinander verschweisst werden. Jede sich zwischen anderen Blechelement-Lage befindende Blechelement-Lagen 71 oder 73 wird dann mindestens bei jedem von derjenigen Wellenscheiteln 1d, die sich von einem ersten Rand 1b bis zum gegenüberstehenden, ersten Rand 1b erstrecken, bei mehreren entlang dem Wellenscheitel verteilten Berührungsbereichen 77 durch eine Schweissverbindung mit einer benachbarten Blechelement-Lage verbunden, wie es in Fig. 9 ersichtlich ist.

Der Stapel 75 von Blechelement-Lagen bildet beim Verschweissen eine feste Einheit, d.h. einen Block, und kann nur noch in eine metallische, beispielsweise aus rostfreiem Stahl bestehende, in Fig. 8 ersichtliche Hülse 103 eingesetzt werden und mit dieser zusammen eine Katalysatorkörper 101 bilden. Die Hülse 103 ist an beiden Enden offen sowie im Querschnitt rechteck- oder viereckförmig und hat dementsprechend vier ebene paarweise zueinander parallele Wände, nämlich zwei aneinander gegenüberstehende Wände 105 und zwei einander gegenüberstehende Wände 107. Der Stapel 75 wird derart in die Hülse 103 eingesetzt, dass sich die einen ersten Ränder 1b der Blechelement-Lagen bei einem Ende der Hülse sowie die anderen ersten Ränder 1b der Blechelement-Lagen beim andere Ende der Hülse befinden und dass die zweiten Ränder 1f der Blechelement-Lagen parallel zur Achse sowie zum Loch der Hülse verlaufen. Die Blechelement-Lagen und der von diesen gebildete Stapel 75 sind ferner so bemessen, dass der Stapel mindestens annähernd spielfrei und satt in die Hülse hineinpasst und dass die zweiten Ränder 1f der Blechelement-Lagen mindestens annähernd an die Wände 107 der Hülse anstossen. Der Stapel 75 kann dann noch auf irgend eine Weise mit der Hülse verbunden und in dieser fixiert werden. Die Blechelement-Lagen können zum Beispiel bei ihren zweiten Rändern 1f durch Schweissverbindungen, nämlich durch senkrecht zu den zweiten Rändern 1f verlaufende Schweissnähte mit den Wänden 107 verbunden werden. Diese Schweissnähte können analog durch die Wände 107 hindurch erzeugt werden, wie es aus der EP 0 775 808 A und der entsprechenden US 6 096 682 A bekannt ist.

Der fertige Katalysatorkörper 101 ist sehr stabil und dauerhaft.

Der Katalysatorkörper 101 kann für sich allein oder zusammen mit mindestens einem andere, gleich oder ähnlich ausgebildeten Katalysatorkörper zur Bildung eines Katalysators verwendet und in ein Gehäuse eingebaut werden, das einen Einlass sowie einen Auslass für das katalytisch zu behandelnde Gas, nämlich zum Beispiel für das katalytisch zu reinigende Abgas eines Verbrennungsmotors, aufweist.

Die einander benachbarten Blechelement-Lagen 71, 73 des fertigen Katalysatorkörpers begrenzen paarweise zusammen einen Durchgang für das Abgas. Jeder dieser Durchgänge verläuft in der in Fig. 9 durch einen Pfeil bezeichneten, allgemeinen Durchgangsrichtung 111 und/oder allgemeinen Abgas-Strömungsrichtung 111 parallel zu den Wänden der Hülse 103 und senkrecht zu den gewellten, ersten Rändern 1b der Blechelement-Lagen. Wie es besonders deutlich in Fig. 10 ersichtlich ist, sind die von den Blechelement-Lagen 71, 73 gebildeten Begrenzungsflächen der Durchgänge fast vollständig mit Überzügen 29 versehen, die katalytisch aktives Edelmetall enthalten. Die Blechelement-Lagen haben lediglich auf der Aussenseite der Wellenscheitel zwischen den entlang einem Wellenscheitel aufeinander folgenden Berührungsbereichen 77 sehr kleine Flächen, bei denen das Abgas in Kontakt mit Teil-Bereichen der metallisch blanken, überzugsfreien Bereiche 55 gelangt. Der Katalysatorkörper ergibt daher eine grosse katalytische Wirkung.

Die Wellen und die Wellenscheitel 11 der einander benachbarten und stellenweise paarweise miteinander verschweissten Blechelement-Lagen 71, 73 bilden mit der allgemeinen Durchgangsrichtung 111 und/oder allgemeinen Abgas-Strömungsrichtung 111 einen Winkel, der gleich der Hälfte des Winkels α ist. Das Abgas wird daher beim Durchströmen eines Durchgangs durch die Wellen und die im Durchgang bei den Berührungsbereichen 77 vorhandenen Schweissverbindungen aus der allgemeinen Durchgangsrichtung und/oder allgemeinen Abgas-Strömungsrichtung lokal unterschiedlich abgelenkt. Dadurch können im Abgas Turbulenzen erzeugt werden, welche die katalytische Wirkung des Katalysatorkörpers noch verbessern.

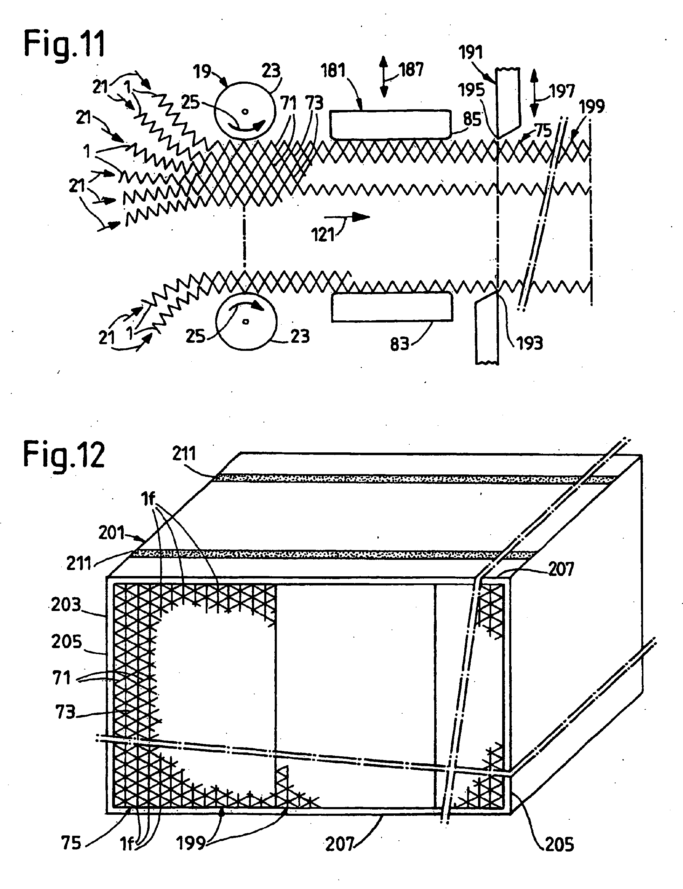

Es können auch mehrere gewellte, bandförmige Blechelemente 1 in der beschriebenen Weise mit überzogenen Bereichen 53 sowie metallisch blanken Bereichen 55 hergestellt und dann gemeinsam mit der in Fig. 11 dargestellten Anlage zur Bildung von Katalysatorkörpern weiterverarbeitet werden. Die Blechelemente 1 können beispielsweise auf Vorratsrollen gewickelt sein oder in einer anderen Form für die Weiterverarbeitung mit der in Fig. 11 ersichtlichen Anlage bereitgestellt werden. Diese Anlage besitzt Führungs- und Transportmittel 19, mit denen die bereitgestellten, bandförmigen Blechelemente 1 gemeinsam einer Schweiss-Einrichtung 181 zugeführt und durch diese hindurch bewegt werden. Die Führungs- und Transportmittel 19 können wie die vorher beschriebenen Führungs- und Transportmittel 19 feststehende Führungsflächen, Rollen und/oder Transportbänder und/oder dergleichen aufweisen, wobei als Beispiel schematisch zwei Rollen 19 dargestellt sind, die durch eine Antriebsvorrichtung in den Richtungen der Pfeile 25 gedreht werden können. Die bandförmigen Blechelemente 1 haben wie das in Fig. 1 ersichtliche Blechelement 1 Wellen mit schief zu den Längsrändern bzw. ersten Rändern der Blechelemente verlaufenden Wellenscheiteln.

Die Blechelemente 1 werden nun derart angeordnet und übereinander der Schweiss-Einrichtung 181 zugeführt, dass Abschnitte von ihnen spätestens beim Eintritt in die Schweiss-Einrichtung einen Stapel 75 von abwechselnd aufeinander folgenden Blechelement-Lagen 71 und 73 bilden, die einander kreuzende Wellen haben und bei blanken Bereichen auf den Aussenseiten der Wellenscheitel aneinander anliegen. Die Schweiss-Einrichtung 181 hat zum Beispiel ähnlich wie die Schweiss-Einrichtung 81 zwei Elektroden 83, 85 mit einander zugewandten, ebenen Flächen. Die obere Elektrode 85 kann mit einer Stell- und Pressvorrichtung in der durch den Doppelpfeil 87 angedeuteten Weise abwechselnd gehoben und nach unten gedrückt werden. Die Elektroden sind elektrisch mit einer Stromzufuhrvorrichtung verbunden, die zum Beispiel ähnlich ausgebildet ist, wie die in Fig. 7 ersichtliche Stromzufuhrvorrichtung 91.

Beim Betrieb der Anlage werden die Blechelemente 1 zusammen in der durch einen Pfeil 121 bezeichneten Transportrichtung 121 sukzessive und schrittweise zur Schweiss-Einrichtung 181 und zwischen den beiden Elektroden 83, 85 hindurch transportiert. Dabei werden sich jeweils zwischen den beiden Elektroden befindliche Längsabschnitte der Blechelemente miteinander verschweisst. Auf diese Weise wird sukzessive ein länglicher, stabartiger Körper gebildet, der links von den Elektroden mit Teilen der ursprünglich separaten Blechelemente zusammenhängt.

Die in Fig. 11 dargestellte Anlage besitzt noch eine Schneid-Einrichtung 191 mit einer feststehenden Schneide 193 und einer bewegbaren Schneide 197, die in der durch den Doppelpfeil 197 angedeuteten Weise vertikal gehoben und gesenkt werden kann. Der durch Zusammenschweissen von Abschnitten der Blechelemente 1 gebildete Körper wird durch Führungs- und Transportmittel 19 schrittweise zur Schneid-Einrichtung 191 und zwischen deren Schneiden 193, 195 hindurch bewegt. Mit der Schneid-Einrichtung werden dann Blöcke 199 vom Körper abgeschnitten. Jeder Block 199 besitzt eine Stapel 75 von miteinander verschweissten Blechelement-Lagen 71, 73. Die Anzahl dieser Blechelement-Lagen ist selbstverständlich gleich der Anzahl Blechelemente 1, die der Schweiss-Einrichtung 181 zugeführt werden, und beträgt vorzugsweise mindestens 5 und zum Beispiel etwa 10 bis 30.

Es können nun mehrere Blöcke 199 zur Herstellung des in Fig. 12 ersichtlichen Katalysatorkörpers 201 verwendet werden. Der Katalysatorkörper 201 hat eine an beiden Enden offene, im Querschnitt rechteck- oder quadratförmige Hülse 203 mit zwei einander gegenüberstehenden Wänden 205 und zwei einander gegenüberstehenden Wänden 207. Die Blöcke 199 werden nebeneinander in die Hülse eingesetzt, so dass sie unmittelbar aneinander anliegen. Die Blöcke werden dabei derart angeordnet, dass sich die ersten Ränder ihrer Blechelement-Lagen 71, 73 bei den beiden offenen Enden der Hülse befinden und dass die zweiten Ränder der Blechelement-Lagen mindestens annähernd an die Wände 207 der Hülse anstossen. Die Blechelement-Lagen werden dann bei ihren zweiten Rändern mit den Wänden 207 der Hülse verschweisst. Das Verschweissen erfolgt dabei durch die Wände 207 hindurch analog wie es aus den bereits erwähnten Dokumenten EP 0 775 808 A1 und US 6 096 682 A bekannt ist. Beim Verschweissen werden Schweissverbindungen, nämlich senkrecht zu den zweiten Rändern der Blechelement-Lagen verlaufende Schweissnähte 211 erzeugt. Der Katalysatorkörper 201 weist dann mindestens zwei, zum Beispiel 5 bis 20 oder noch mehr Blöcke 199 auf.

Es sei noch angemerkt, dass die zu verschiedenen Blöcken 199 gehörenden Blechelement-Lagen 71 73 zwar - abhängig von der Anordnung der Blöcke in der Hülse - eventuell einander zugewandte Wellenscheitel haben können. Die zu verschiedenen Blöcken gehörenden Blechelement-Lagen sind jedoch bei den Wellenscheiteln nicht direkt miteinander verbunden. Im Übrigen können die Blöcke auch so in der Hülse angeordnet werden, dass die blanken Bereiche der Wellenscheitel der zu verschiedenen Blöcken gehörenden Blechelement-Lagen überhaupt nirgends aneinander anliegen. Die verschiedenen Blöcke sind also im Wesentlichen nur mit der Hülse und nur indirekt über diese, aber nirgends direkt miteinander verbunden.

Es wäre natürlich auch möglich, nur einen einzigen mit der Anlage gemäss Fig. 11 hergestellten Block 199 in eine Hülse einzusetzen. Der dabei gebildete Katalysatorkörper würde dann analog wie der in Fig. 18 ersichtliche Katalysatorkörper 101 nur einen Block von miteinander verschweissten Blechelement-Lagen enthalten. Umgekehrt könnten man mehrere Blöcke, die gemäss dem anhand der Figuren 6 und 7 beschriebene Verfahre aus einem einzigen Blechelement oder nacheinander aus mehreren Blechelementen hergestellt wurden, in ein und dieselbe Hülse einsetzen und mit dieser verschweissen.

Die beschriebenen Verfahren ermöglichen, stellenweise Überzüge aufweisende und stellenweise blanke Blechelemente sowie solche Blechelemente aufweisende Katalysatorkörper schnell, einfach und kostengünstig herzustellen. Wenn die Einrichtungen 11, 31, 41, 61 und die allenfalls zum Aufbringen und Trocknen von mindestens einer zusätzlichen "wash coat" Schicht vorhandenen Beschichtungs- und Trocknungs-Einrichtung gemäss den Figuren 2 bis 5 Führungs- und Transportmittel aufweisen, kann ein bandförmiges Blechelement vom ersten Beschichtungsvorgang bis zum Trocknen des im Bad 65 aufgebrachten, zweiten Überzugsmaterials fortlaufend kontinuierlich oder quasikontinuierlich verarbeitet werden, was eine besonders effiziente Herstellung ermöglicht. Im Übrigen sei zu den in den Figuren 2 bis 5 und 11 mit glatten, kreisförmigen Umfangsflächen gezeichneten Rollen 23 noch angemerkt, dass diese noch in bzw. zwischen die Wellen der Blechelemente eingreifende Zähne aufweisen könnten. Entsprechendes gilt für die eventuell anstelle von Rollen oder zusätzlich zu solchen vorhandenen Transportbänder.

Man kann jedoch auch gewisse der beschriebenen Führungs- und Transportmittel, insbesondere diejenigen der Trocknungs-Einrichtung 31 und/oder der Beschichtungs-Einrichtung 61 weglassen. In diesem Fall kann dann mindestens ein Blechelement oder mindestens ein Stück eines solchen in den Ofen der Trocknungs-Einrichtung 31 oder in das Bad der Beschichtungs-Einrichtung 61 eingebracht und nach einer vorgesehenen Zeitdauer wieder aus dem Ofen bzw. Bad herausgenommen werden.

Die Verfahren zur Herstellung von Blechelementen sowie Katalysatorkörpern und die Einrichtungen zur Durchführung dieses Verfahrens können noch auf andere Weisen geändert werden. Die aus Schleifbändern bestehenden Schleiforgane 45 der Einrichtung 41 könnten zum Beispiel durch Schleifscheiben oder irgendwelche Organe oder Werkzeuge zum Abschaben und/oder Abkratzen und/oder Abreiben von Überzugsmaterial ersetzt werden. Die Elektroden 83, 85 der in Fig. 11 dargestellten Schweiss-Einrichtungen könnten durch rollenförmige, drehbare Elektroden ersetzt werden, mit denen die Blechelemente während ihrer Transportbewegung verschweisst werden könnten.

Die Blechelement-Lagen könnten bei den Berührungsbereichen statt durch Widerstandsschweissen, durch ein anderes Schweissverfahren oder durch Hartlöten oder Versintern stoffschlüssig miteinander verbunden werden. Ferner könnten die Blechelement-Lagen eines Katalysatorkörpers statt aus separaten Stücken eines Blechelements aus Abschnitten eines zusammenhängenden, zickzack und/oder mäanderförmig gebogenen und oder gefalteten Blechelements gebildet werden.

Das zweite Überzugsmaterial könnte möglicherweise anstelle von mindestens einem Edelmetall und/oder von mindestens einer Vorläufer-Verbindung eines Edelmetalls oder zusätzlich zu mindestens einem Edelmetall und/oder mindestens einer Edelmetall-Vorläufer-Verbindung mindestens ein anderes katalytisch aktives Material und/oder mindestens eine andere Vorläufer-Verbindung eines anderen katalytisch aktiven Materials aufweisen. Das zweite Überzugsmaterial könnte zum Beispiel mindestens ein katalytisch aktives Unedelmetall und/oder mindestens ein Oxid und/oder Salz eines Unedelmetalls aufweisen.

## Patentansprüche

1. Verfahren zur Herstellung mindestens eines Blechelements (1) zur Bildung eines Katalysatorkörpers (101) für eine katalytische Behandlung von Gas, insbesondere von Abgas eines Verbrennungsmotors, wobei das Blechelement (1) Wellen (1c) mit Wellenscheiteln (1d), einen metallischen Kern (27), Bereiche (53) mit den Kern (27) bedeckenden Überzügen(29) und auf den Aussenseiten der Wellenscheitel (1d) metallisch blanke Bereiche (55) aufweist, wobei mindestens ein Wellen (1c) und zwei einander abgewandte Flächen (1a) aufweisendes, metallisch blankes Blechelement (1) hergestellt wird, **dadurch gekennzeichnet, dass** ein erstes, mindestens ein Metalloxid aufweisendes Überzugsmaterial (13) auf die beiden Flächen (1a) des Blechelements (1) aufgebracht wird, dass auf den Aussenseiten der Wellenscheitel (1d) aufgebrachtes, erstes Überzugsmaterial (13) mechanisch vom Blechelement (1) entfernt wird, dass danach ein zweites Überzugsmaterial auf die mit dem ersten Überzugsmaterial (13) versehenen Bereiche der Flächen (1a) aufgebracht wird und dass das zweite Überzugsmaterial ein katalytisch aktives Material aufweist und/oder zur Bildung eines solchen dient.

2. Verfahren nach Anspruch 1, **dadurch gekennzeichnet, dass** das erste Überzugsmaterial (13) frei von Edelmetall sowie nach dem Verfestigen auf dem Blechelement (1) porös ist und zum Beispiel mindestens zum Teil aus Aluminiumoxid besteht.

3. Verfahren nach Anspruch 1 oder 2, **dadurch gekennzeichnet, dass** das erste Überzugsmaterial (13) auf das Blechelement (1) aufgesprüht wird und dass das Blechelement (1) danach erhitzt wird, um das erste Überzugsmaterial (13) zu trocknen und beispielsweise durch Backen und/oder Einbrennen zu verfestigen.

4. Verfahren nach einem der Ansprüche 1 bis 3, **dadurch gekennzeichnet, dass** nach dem Aufbringen einer Schicht von erstem Überzugsmaterial (13) auf die beiden Flächen (1a) noch mindestens eine zweite Schicht eines ersten Überzugsmaterials (13) auf die beiden Flächen (1a) aufgebracht wird, wobei die nacheinander aufgebrachten, ersten Überzugsmaterialien (13) zum Beispiel gleich oder verschieden sein können und/oder zum Beispiel derart ausgebildet und aufgebracht werden, dass sie gleiche oder verschiedene poröse Strukturen ergeben.

5. Verfahren nach einem der Ansprüche 1 bis 4, **dadurch gekennzeichnet, dass** das mechanische Entfernen von erstem überzugsmaterial (13) durch Abschleifen und/oder Abschaben und/oder Abkratzen und/oder Abreiben erfolgt.

6. Verfahren nach einem der Ansprüche 1 bis 5, **dadurch gekennzeichnet, dass** das Aufbringen und Entfernen von erstem Überzugsmaterial (13) derart erfolgt, dass die auf den Aussenseiten der Wellenscheitel (1d) gebildeten, metallisch blanken Bereiche (55) sich lückenlos entlang der ganzen Länge der Wellenscheitel (1d) erstrecken und dass diejenigen Bereiche der beiden Flächen (1a), die sich zwischen den durch Entfernen von erstem Überzugsmaterial (13) gebildeten, metallisch blanken Bereichen (55) der Wellscheitel (1d) befinden, überall mit erstem Überzugsmaterial (13) versehen sind.

7. Verfahren nach einem der Ansprüche 1 bis 6, **dadurch gekennzeichnet, dass** das zweite Überzugsmaterial mindestens ein katalytisch aktives Edelmetall und/oder mindestens eine Vorläufer-Verbindung, zum Beispiel mindestens ein Edelmetall-Salz, zur Bildung mindestens eines katalytisch aktiven Edelmetalls aufweist, wobei das zweite Überzugsmaterial zum Beispiel mindestens eines der Edelmetalle Platin, Palladium und Rhodium und/oder mindestens eine Vorläufer-Verbindung zur Bildung von mindestens einem dieser Edelmetalle aufweist.

8. Verfahren nach einem der Ansprüche 1 bis 7, **dadurch gekennzeichnet, dass** das Blechelement (1) zum Aufbringen des zweiten Überzugsmaterials in ein Bad (65) eingebracht und/oder durch ein Bad (65) hindurch transportiert wird und dass im Bad (65) mindestens ein Edelmetall und/oder mindestens ein Edelmetall-Salz durch Adsorption, beispielsweise Chemisorption und/oder eventuell Physisorption, am vorher aufgebrachten, ersten Überzugsmaterial (13) angelagert und/oder in diesem eingelagert wird.

9. Verfahren zur Herstellung mindestens eines Katalysatorkörpers unter Verwendung mindestens eines nach einem der Ansprüche 1 bis 8 hergestellten Blechelements (1), **dadurch gekennzeichnet, dass** aus dem Blechelement (1) oder aus Blechelementen (1) aneinander anliegende Blechelement-Lagen (71, 73) gebildet werden, von denen jede Wellen (1c) mit Wellenscheiteln (1d), einen metallischen Kern (27), Überzüge (29) und auf der Aussenseite der Wellenscheitel (1d) metallisch blanke Bereiche (55) aufweist, dass die Blechelement-Lagen (71, 73) derart angeordnet werden, dass Wellenscheitel (1d) von einander benachbarten Blechelement-Lagen (71, 73) einander kreuzen und bei Berührungsbereichen (77) der metallisch blanken Bereiche (55) aneinander anliegen und dass die einander benachbarten Blechelement-Lagen (71, 73) bei den Berührungsbereichen (77) miteinander verbunden werden.

10. Verfahren nach Anspruch 9, **dadurch gekennzeichnet, dass** die Blechelement-Lagen (71, 73) beim Verbinden bei den Berührungsbereichen (77) stoffschlüssig, zum Beispiel durch Widerstandsschweissen, miteinander verbunden werden, wobei beispielsweise durch Entladen mindestens eines elektrischen Kondensators (95) ein zum Widerstandsschweissen dienender elektrischer Strom erzeugt wird.

11. Verfahren nach Anspruch 9 oder 10, **dadurch gekennzeichnet, dass** mehrere bandförmige, Wellen (1c), überzogene Bereiche (53) und metallisch blanke Bereiche (55) aufweisenden Blechelemente (1) hergestellt und derart zusammengeführt werden, dass sie Blechelement-Lagen (71, 73) bilden, die bei einander kreuzenden Wellenscheiteln (1d) aneinander anliegen, dass die Blechelement-Lagen (71, 73) sukzessive miteinander verbunden werden und dass Abschnitte der miteinander verbundenen Blechelement-Lagen (71, 73) abgeschnitten und **dadurch** Blöcke (199) zur Bildung mindestens eines Katalysatorkörpers (101, 201) gebildet werden.

12. Verfahren nach einem der Ansprüche 9 bis 11, **dadurch gekennzeichnet, dass** mehrere Blöcke (199) mit je einem Stapel (75) aneinander anliegender und fest miteinander verbundener Blechelement-Lagen (71, 73) gebildet werden und dass die Blöcke (199) zu einem Katalysatorkörper (201) zusammengebaut werden, ohne die zu verschiedenen Blöcken (199) gehörenden Blechelemente (1) bei Wellenscheiteln (1d) direkt fest miteinander zu verbinden, wobei zum Beispiel mehrere Blöcke (199) in eine Hülse (203) eingesetzt und mit dieser verschweisst werden.

13. Blechelement, das durch das Verfahren nach einem der Ansprüche 1 bis 8 hergestellt ist.

14. Katalysatorkörper mit aneinander anliegenden Blechelement-Lagen (71, 73), die aus mindestens einem durch das Verfahren nach einem der Ansprüche 1 bis 8 hergestellten Blechelement (1) gebildet sind.

15. Katalysatorkörper nach Anspruch 14, **dadurch gekennzeichnet, dass** er eine Hülse (203) und mindestens zwei in dieser angeordnete Blöcke (199) aufweist, von denen jeder mehrere Blechelement-Lagen (71, 73) aufweist, die bei Berührungsbereichen (77) der Wellenscheiteln (1d) aneinander anliegen und fest miteinander verbunden sind, dass die Blöcke (199) fest mit der Hülse (203) verbunden sind und dass keine zu verschiedenen Blöcken (199) gehörenden Blechelement-Lagen (71, 73) bei Wellenscheiteln (1d) direkt miteinander verbunden sind.

## Claims

1. Method for the production of at least one sheet metal member (1) for the formation of a catalyst body (101) for a catalytic treatment of gas, in particular of exhaust gas of an internal combustion engine, the sheet metal member (1) having corrugations (1c) with wave summits (1d), a metallic core (27), regions (53) with coatings (29) covering the core (27) and, on the outsides of the wave summits (1d), bare metallic regions (55), at least one bare metallic sheet metal member (1) having corrugations (1c) and two surfaces (1a) facing away from one another being produced, **characterized in that** a first coating material (13) comprising at least one metal oxide is applied to the two surfaces (1a) of the sheet metal member (1), **in that** first coating material (13) applied to the outsides of the wave summits (1d) is mechanically removed from the sheet metal member (1), **in that** a second coating material is then applied to those regions of the surfaces (1a) which were provided with the first coating material (13), and **in that** the second coating material comprises a catalytically active material and/or serves for the formation of such a material.

2. Method according to claim 1, **characterized in that** the first coating material (13) is free of noble metal and is porous after consolidation on the sheet metal member (1) and, for example, at least partly consists of aluminium oxide.

3. Method according to claim 1 or 2, **characterized in that** the first coating material (13) is sprayed on to the sheet metal member (1) and **in that** the sheet metal member (1) is then heated in order to dry the first coating material (13) and, for example, to solidify it by caking and/or baking after spraying on.

4. Method according to any of claims 1 to 3, **characterized in that**, after the application of a layer of first coating material (13) to the two surfaces (1a), at least one second layer of a first coating material (13) is also applied to the two surfaces (1a), wherein the successively applied, first coating materials (13) may be, for example, identical or different and/or are, for example, formed and applied in such a way that they give identical or different porous structures.

5. Method according to any of claims 1 to 4, **characterized in that** the mechanical removal of first coating material (13) is effected by grinding off and/or scraping off and/or scratching off and/or rubbing off.

6. Method according to any of claims 1 to 5, **characterized in that** the application and removal of first coating material (13) is effected in such a way that the bare metallic regions (55) formed on the outsides of the wave summits (1d) extend without gaps along the entire length of the wave summits (1d), and **in that** those regions of the two surfaces (1a) which are present between those bare metallic regions (55) of the wave summits (1d) formed by removal of first coating material (13) are provided everywhere with first coating material (13).

7. Method according to any of claims 1 to 6, **characterized in that** the second coating material comprises at least one catalytically active noble metal and/or at least one precursor compound, for example, at least one noble metal salt, for the formation of at least one catalytically active noble metal, wherein the second coating material comprises, for example, at least one of the noble metals, platinum, palladium and rhodium and/or at least one precursor compound for the formation of at least one of these noble metals.

8. Method according to any of claims 1 to 7, **characterized in that**, for application of the second coating material, the sheet metal member (1) is introduced into a bath (65) and/or transported through a bath (65) and **in that**, in the bath (65), at least one noble metal and/or at least one noble metal salt is adsorbed, for example by chemisorption and/or physisorption, on previously applied, first coating material (13) and/or incorporated therein.

9. Method for the production of at least one catalyst body using at least one sheet metal member (1) produced according to any of claims 1 to 8, **characterized in that** sheet metal member layers (71, 73) adjacent to one another are formed from the sheet metal member (1) or from sheet metal members (1), each of which layers (71, 73) has corrugations (1c) with wave summits (1d), a metallic core (27), coatings (29) and, on the outside of the wave summits (1d), bare metallic regions (55), **in that** the sheet metal member layers (71, 73) are arranged in such a way that wave summits (1d) of adjacent sheet metal member layers (71,73) intersect one another and rest against one another in contact regions (77) of the bare metallic regions (55), and **in that** the adjacent sheet metal member layers (71, 73) are joined to one another in the contact regions (77).

10. Method according to claim 9, **characterized in that** the sheet metal member layers (71, 73) are bonded by material closure, for example, by resistance welding, to one another on joining in the contact regions (77), wherein, for example, an electric current which serves for resistance welding is generated by discharge of at least one electrical capacitor (95).

11. Method according to claim 9 or 10, **characterized in that** a plurality of strip-like sheet metal members (1) having corrugations (1c), coated regions (53) and bare metallic regions (55) are produced and are combined with one another in such a way that they form sheet metal member layers (71, 73), which rest against one another at intersecting wave summits (1d), **in that** the sheet metal member layers (71, 73) are joined to one another successively and **in that** segments of those sheet metal member layers (71, 73) which are joined to one another are cut off, and blocks (199) for the formation of at least one catalyst body (101, 201) are thus formed.

12. Method according to any of claims 9 to 11, **characterized in that** a plurality of blocks (199) each comprising a stack (75) of sheet metal member layers (71, 73) resting against one another and firmly joined to one another are formed and **in that** the blocks (199) are assembled to give a catalyst body (201) without the sheet metal members (1) belonging to different blocks (199) being directly joined to one another, wherein, for example, a plurality of blocks (199) are inserted into a sleeve (203) and welded to it.

13. Sheet metal member produced by the method according to any of claims 1 to 8.

14. Catalyst body comprising sheet metal member layers (71, 73) which are adjacent to one another and are formed from at least one sheet metal member (1) produced by the method according to any of claims 1 to 8.

15. Catalyst body according to claim 14, **characterized in that** it has a sleeve (15) and at least two blocks (199) arranged therein, each of which has a plurality of sheet metal member layers (71, 73), which rest against one another and are firmly joined to one another in contact regions (77) of the wave summits (1d), **in that** the blocks (199) are firmly joined to the sleeve (203) and **in that** no sheet metal member layers (71, 73) belonging to different blocks (199) are directly joined to one another at wave summits (1d).

## Revendications

1. Procédé de fabrication d'au moins un élément métallique en tôle (1) pour la formation d'un corps catalytique (101) pour le traitement catalytique de gaz, en particulier de gaz d'échappement d'un moteur thermique, où l'élément métallique en tôle (1) comprend des ondes (1c) avec des crêtes d'ondes (1d), un noyau métallique (27), des zones (53) avec des revêtements (29) qui recouvrent le noyau (27) et des zones nues (55) sur les faces extérieures des crêtes d'ondes (1 d), où au moins un élément métallique en tôle (1) métalliquement nu est fabriqué comprenant des ondes (1c) et deux surfaces (1a) détournées l'une de l'autre, **caractérisé en ce qu'**une première matière de revêtement (13) comprenant au moins un oxyde métallique est disposée sur les deux surfaces (1a) de l'élément métallique en tôle (1), **en ce que** la première matière de revêtement (13) disposée sur les faces extérieures des crêtes d'ondes (1d) est enlevée de l'élément métallique en tôle (1) de manière mécanique, **en ce qu'**une deuxième matière de revêtement est ensuite disposée sur les zones des surfaces (1a) munies de la première matière de revêtement (13) et **en ce que** la deuxième matière de revêtement comprend une matière catalytique active et/ ou sert à la formation d'une telle matière.

2. Procédé selon la revendication 1, **caractérisé en ce que** la première matière de revêtement (13) est libre de métal précieux et poreuse après la fixation sur l'élément métallique en tôle (1) et se compose par exemple au moins partiellement d'oxyde d'aluminium.

3. Procédé selon les revendications 1 ou 2, **caractérisé en ce que** la première matière de revêtement (13) est vaporisée sur l'élément métallique en tôle (1) et **en ce que** l'élément métallique en tôle (1) est ensuite chauffé afin de sécher la première matière de revêtement (13) et de la fixer par exemple par cuisson et/ ou par calcination.

4. Procédé selon l'une des revendications 1 à 3, **caractérisé en ce qu'**après l'application d'une couche de la première matière de revêtement (13) sur les deux surfaces (1a), au moins encore une deuxième couche d'une première matière de revêtement (13) est appliquée sur les deux surfaces (1a), où les premières matières de revêtement (13) appliquées successivement peuvent par exemple être égales ou différentes et/ ou par exemple être formées et appliquées de telle manière qu'elles résultent en des structures poreuses égales ou différentes.

5. Procédé selon l'une des revendications 1 à 4, **caractérisé en ce que** l'enlèvement mécanique de la première matière de revêtement (13) est réalisé par abrasion et/ ou par raclage et/ ou par grattage et/ ou par frottement.

6. Procédé selon l'une des revendications 1 à 5, **caractérisé en ce que** l'application et l'enlèvement de la première matière de revêtement (13) sont réalisés de telle manière que les zones nues (55) formées sur les faces extérieures des crêtes d'ondes (1d) s'étendent sans interruption sur toute la longueur des crêtes d'ondes (1d) et **en ce que** les zones des deux surfaces (1a), qui se situent entre les zones nues (55) des crêtes d'ondes (1d), formées par l'enlèvement de la première matière de revêtement (13), sont munies partout de la première matière de revêtement (13).

7. Procédé selon l'une des revendications 1 à 6, **caractérisé en ce que** la deuxième matière de revêtement comprend au moins un métal précieux catalytiquement actif et/ ou au moins un composé précurseur, par exemple au moins un sel de métal précieux, pour la formation d'au moins un métal précieux catalytiquement actif, où la deuxième matière de revêtement comprend par exemple au moins l'un des métaux précieux platine, palladium et rhodium et/ ou au moins un composé précurseur pour la formation d'au moins un de ces métaux précieux.

8. Procédé selon l'une des revendications 1 à 7, **caractérisé en ce que** l'élément métallique en tôle (1) est introduit dans un bain (65) et/ ou transporté à travers un bain (65) pour l'application de la deuxième matière de revêtement et **en ce que** dans le bain (65) au moins un métal précieux et/ ou au moins un sel de métal précieux est incorporé ou additionné par adsorption, par exemple par chimisorption et/ ou éventuellement par physisorption à la première matière de revêtement (13) précédemment appliquée.

9. Procédé de fabrication d'au moins un corps catalytique en utilisant au moins un élément métallique en tôle (1) fabriqué selon l'une des revendications 1 à 8, **caractérisé en ce que** des couches d'élément(s) métallique(s) en tôle (71, 73) adjacentes sont formées par l'élément métallique en tôle (1) ou par les éléments métalliques en tôle (1), desquelles chacune comprend des ondes (1c) avec des crêtes d'ondes (1d), un noyau métallique (27), des revêtements (29) et des zones nues (55) sur les faces extérieures des crêtes d'ondes (1d), **en ce que** les couches d'élément(s) métallique(s) en tôle (71, 73) sont disposées de telle manière que les crêtes d'ondes (1d) des couches d'élément(s) métallique(s) en tôle (71, 73) adjacentes se croisent et se touchent dans des zones de contact (77) dans les zones nues (55) et **en ce que** les couches d'élément(s) métallique(s) en tôle (71, 73) adjacentes sont reliées ensemble dans les zones de contact (77).

10. Procédé selon la revendication 9, **caractérisé en ce que** les couches d'élément(s) métallique(s) en tôle (71, 73) sont reliées ensemble par liaison de matière lors de la liaison aux zones de contact (77), par exemple par soudage par résistance, où par exemple par décharge au moins d'un condensateur (95) électrique est généré un courant électrique qui sert au soudage par résistance.

11. Procédé selon les revendications 9 ou 10, **caractérisé en ce que** plusieurs éléments métalliques en tôle (1) en forme de bande, comprenant des ondes (1 c), des zones avec revêtement (53) et des zones nues (55) sont fabriqués et assemblés de telle manière qu'ils forment des couches d'éléments métalliques en tôle (71, 73) qui sont adjacentes en se touchant aux crêtes d'ondes (1d) qui se croisent, **en ce que** les couches d'éléments métalliques en tôle (71, 73) sont successivement reliées ensemble et que des sections des couches d'éléments métalliques en tôle (71, 73) reliées ensemble sont coupées pour ainsi former des blocs (199) pour la formation d'au moins un corps catalytique (101, 201).

12. Procédé selon l'une des revendications 9 à 11, **caractérisé en ce que** plusieurs blocs (199) sont formés avec à chaque fois une pile (75) de couches d'élément(s) métallique(s) en tôle (71, 73) adjacentes et reliées ensemble de manière fixe et **en ce que** les blocs (199) sont assemblés en un corps catalytique (201) sans relier les éléments métalliques en tôle (1) appartenant aux différents blocs (199) aux crêtes d'ondes (1d) directement de manière fixe, où par exemple plusieurs blocs (199) sont insérés dans une enveloppe (203) et soudés avec celle-ci.

13. Elément métallique en tôle fabriqué par le procédé selon l'une des revendications 1 à 8.

14. Corps catalytique avec des couches d'éléments métalliques en tôle (71, 73) adjacentes qui sont formées à partir d'au moins un élément métallique en tôle (1) fabriqué par le procédé selon l'une des revendications 1 à 8.

15. Corps catalytique selon la revendication 14, **caractérisé en ce qu'**il comprend une enveloppe (203) et au moins deux blocs (199) disposés dans celle-ci, où chacun de ces blocs comprend plusieurs couches d'élément(s) métallique(s) en tôle (71, 73) qui sont adjacentes et reliées ensemble de manière fixe dans des zones de contact (77) des crêtes d'ondes (1d), **en ce que** les blocs (199) sont reliés de manière fixe avec l'enveloppe (203) et **en ce qu'**aucune des couches d'élément(s) métallique(s) en tôle (71, 73) appartenant aux différents blocs (199) n'est directement reliée l'une à l'autre aux crêtes d'ondes (1d).
